(19) **Europäisches Patentamt**

**European Patent Office**

**Office européen des brevets**

(11) **EP 0 901 987 B1**

(12) **EUROPEAN PATENT SPECIFICATION**

(45) Date of publication and mention
of the grant of the patent:
**30.03.2005 Bulletin 2005/13**

(51) Int Cl.$^7$: **C02F 1/00**, C02F 1/50

(21) Application number: **98115842.1**

(22) Date of filing: **21.08.1998**

(54) **Method for improving water quality of lake or the like and water quality improving shading means used therefor**

Verfahren zur Verbesserung der Wasserqualität in einem See oder ähnlichem und Schattierungsmittels dafür

Procédé permettant l'amelioration de la qualité de l'eau dans un lac ou similaire et moyens d'ombrage pour l'amelioration de la qualité de l'eau utilisés dans ce but

(84) Designated Contracting States:
**DE FR GB NL**

(30) Priority: **01.09.1997 JP 25133997**
**27.02.1998 JP 6189198**

(43) Date of publication of application:
**17.03.1999 Bulletin 1999/11**

(73) Proprietor: **Veritas Corporation**
**Tokyo (JP)**

(72) Inventor: **Kojima, Sadao**
**Hachiouji-shi, Tokyo (JP)**

(74) Representative: **Gossel, Hans K., Dipl.-Ing. et al**
**Lorenz-Seidler-Gossel**
**Widenmayerstrasse 23**
**80538 München (DE)**

(56) References cited:
**US-A- 4 244 323**    **US-A- 4 257 350**
**US-A- 4 890 413**    **US-A- 5 251 571**

- **PATENT ABSTRACTS OF JAPAN vol. 1996, no. 09, 30 September 1996 (1996-09-30) & JP 08 130998 A (DIA GOMME KK;ISHIKAWA SANGYO KK), 28 May 1996 (1996-05-28)**
- **PATENT ABSTRACTS OF JAPAN -& JP 09 094563 A (TAKIRON CO LTD; OTAKI SHIGETOSHI), 8 April 1997 (1997-04-08)**

**Description**

BACKGROUND OF THE INVENTION

FIELD OF THE INVENTION

The present invention relates to a method for improving water quality which is capable of improving water quality of a lake, lakelet, marsh, pond, pool or the like (hereinafter, these are generically referred to as lake or the like, or often simply as lake) that is relatively shallow, for example, that has a depth of about 5m or less.

DESCRIPTION OF THE PRIOR ART

It is widely known that recently, lakes have been impaired in water quality, and thus tap water, sight seeing, recreations, etc. have undesirably been affected. Further, water pollution caused by development of water bloom (for example, due to outbreak of Microcystis) in a pool or agricultural reservoir has become a problem. It has been pointed out that these problems are attributable to eutrophication of a lake or the like. This is because eutrophication of a lake or the like causes rapid multiplication of algae to disturb order of an ecosystem in the lake or the like.

Heretofore, various methods have been proposed for improving water quality of a lake or the like having a water depth of about 5m or less, and some of these have practically been used. However, almost no methods have been provided yet which are successful in attaining satisfactory effect. In other words, water pollution of a lake or the like has been believed to be mainly attributable to multiplication of algae such as Microcystis, and thus studies have been made on multiplication control and removal of algae. With a view to effecting multiplication control and removal of Microcystis or the like, the conventional methods have been directed to removal of nitrogen (N) and phosphorus (P) in water. This is the reason for the unsuccessfulness in the conventional methods.

Patent Abstract of Japan to JP-A-63200886 discloses a floating body for preventing propagation of algae to be floated on the surface of water, in a water storage tank etc. Patent Abstract of Japan to JP-A-03245804 describes the use of a freely openable and closable shading plate above a fluiding weir and a water channel to suppress the generation of algae.

A method for cleaning water and polluted ponds and lakes by floating an island which can clean the polluted water is known from Patent Abstract of Japan corresponding to JP-A-08130998. US 5,251,571 discloses a submersible cage system for cultivating aquatic animals.

A cover for preventing algae and covering the opening of a water-treating tank is described in Patent Abstract of Japan corresponding to JP-A-09094563.

SUMMARY OF THE INVENTION

In view of the above described problem inherent in the conventional techniques, it is an object of the present invention to provide a method for improving water quality which is preferably used for improvement of water quality of a relatively shallow lake or the like.

This object is achieved with a method for improving water quality of a lake or the like having the features of claim 1. Subclaims are directed to preferable embodiments.

It is preferred that the shadin member or the float member in the form of a board, pipe or the like have its bottom provided with a brush-like or string-like contact member for contact with water, said contact member being such that copper wire or a wiry exhibiting bactericidal activity substantially comparable to that of copper wire is woven or not woven therein. By virtue of this, microorganisms in water gather on the contact member to form a biological film, and the microorganisms forming the biological film ingest organic matter or suspended matter or oxidize ammonia in the water. In consequence; further improved water quality is attained.

It is preferred from the viewpoint of good appearance during water quality improving operation that the shading member be in the form of an artificial duckweed. Further, it is preferred that the contact member have its lower end provided with a plummet for straightly suspending the contact member toward the bottom of the water. By virtue of this, the contact member is stably suspended in the water to lead to better results. It is also preferred that the contact member have its lower end provided with a weight for alighting and resting on the bottom of a lake or the like, thereby preventing the shading means of the present invention from being carried by the wind or waves.

To sum up, the present inventor has made extensive and intensive researches on improvement of water quality or a lake or the like, and as a result, it has found that in a relatively shallow lake or the like having a water depth of about 5m or less, water quality thereof can be improved by (controlling eutrophication of the lake or the like and) controlling multiplication of algae to thereby maintain order of an ecosystem in the lake or the like. The present invention has been completed on the basis of the finding.

BRIEF DESCRIPTION OF THE DRAWINGS

Fig. 1 is an illustration showing relationship between eutrophication of a lake and an ecosystem in the lake;
Fig. 2 is an illustrative view showing the principle of multiplication (production) of algae compared to an automobile utilizing solar energy;
Fig. 3 is a graphical representation showing relationships between intensity of illuminating light and production of algae after four-day shading with respect to various shading degrees;

Fig. 4 is a graphical representation showing relationships between shading time in terms of number of days and decrease in production of algae;

Fig.5 is a graphical representation showing vertical distributions of photosynthesis of algae (phytoplankton);

Fig. 6 is a graphical representation showing multiplication and dimensional change of algae;

Fig. 7 is a graphical representation showing shading degrees required for controlling production of algae in an upper portion of a lake to 20%;

Fig. 8 is a graphical representation showing relationship between multiplication rate of algae and required shading degree;

Fig. 9 is a perspective view of an embodiment of the shading means for performing the method of improving water quality according to the present invention;

Fig. 10 is a side view of another embodiment of the shading means for performing the method of improving water quality according to the present invention;

Fig. 11 is a plan view showing a mode of water quality improving operation by means of the embodiment shown in Fig.9 of the shading means for improving water quality;

Fig. 12 is a schematic view showing a mode of water quality improving operation by means of another embodiment of the shading means for performing the method of improving water quality according to the present invention;

Fig. 13 is a view showing in plan the mode in Fig. 12;

Fig. 14 is a front view of still another embodiment for performing the method of the present invention;

Fig. 15 is a plan view showing a mode of water quality improving operation by means of the embodiment shown in Fig. 14 of the shading means for improving water quality;

Fig. 16 is a plan view of a further embodiment for performing the method of the present invention;

Fig. 17 is a schematic view showing a mode of water quality improving operation by means of the embodiment shown in Fig. 16 of the shading means for improving water quality;

Fig. 18 is a schematic view showing a mode of water quality improving operation by means of a still further embodiment of the shading means for performing the method of improving water quality according to the present invention; and

Fig. 19 is a view showing in plan the mode in Fig. 18

## DESCRIPTION OF THE INVENTION

In the following, the method for improving water quality according to the present invention will be described theoretically.

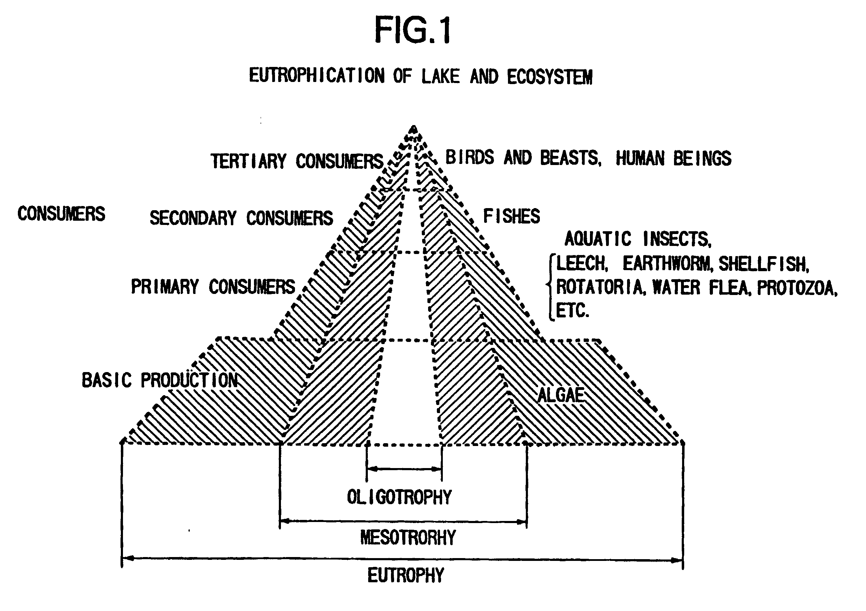

In general, there is no particular problem when an ecosystem in a lake or the like is maintained in neither too much nor too less order such that algae grow the lake or the like, and aquatic insects, leech, earthworm, shellfishes, Rotatoria, water flea, protozoa and the like as predators ingest the algae to grow, and the predators are in turn predatorily ingested as victims by fishes (fin) to feed the fishes, and birds and beasts (fur and feather) and human beings catch the fishes to ingest the same. However, if a lake or the like eutrophicates due to, for example, inflow of eutrophic sewage or drainage resulting from daily life, algae explosively propagates at a multiplication rate in far excess of that of Metazoa as predators. This is attributable to the fact that algae proliferate by repeating binary division, whereas Metazoa grow through egg laying, hatch, eclosion, metamorphosis, etc. Accordingly, there is large difference between the multiplication rates thereof. Expressed illustratively, the foregoing is as shown in Fig. 1.

In other words, when a lake or the like is mesotrophic, an ecosystem therein is maintained in order. However, when a lake or the like becomes oligotrophic, multiplication rate of Metazoa is lowered, or maybe, Metazoa are put out of existence. On the other hand, when a lake or the like eutrophicates, algae proliferate in excess of predation by Metazoa to lead to deterioration of water quality.

In view of the above-described principle, for control of eutrophication of a lake or the like, it is necessary to thoroughly depress and thereby minimize over-multiplication of algae in excess of ecosystem order. With a view to controlling multiplication of algae, it has been attempted to reduce nutrients therefor, among others, nitrogen (N) and phosphorus (P) which tend to be insufficient in the natural world. By such a manner in the attempts, however, it is extremely difficult to control multiplication of algae. It is state of things that there have been substantially no successful examples.

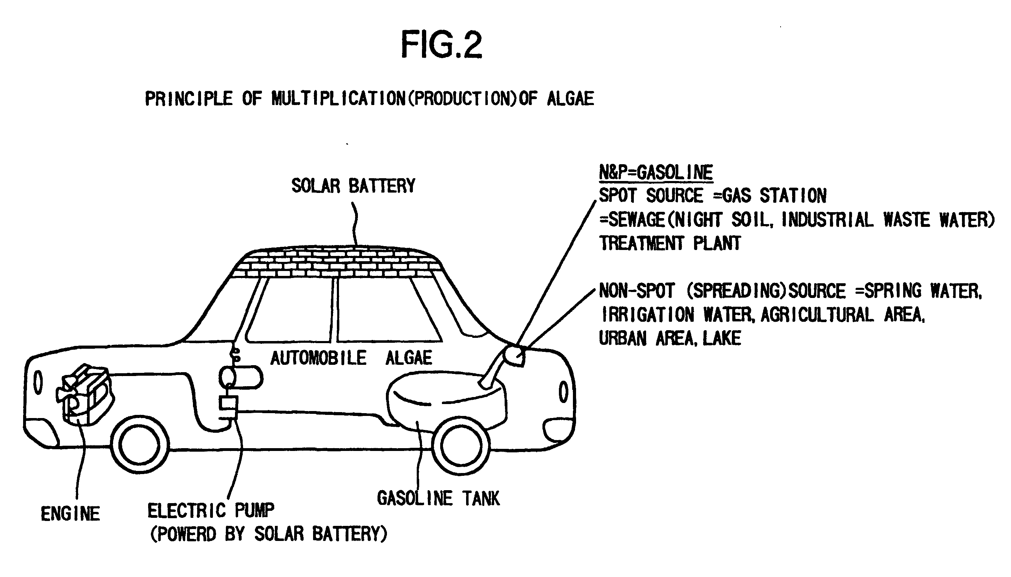

In the following, a method for controlling algae will be described with reference to Fig. 2 while comparing algae to an automobile.

An ordinary automobile is so constructed as to be capable of running when it is provided with an engine and gasoline. On the other hand, in an automobile Algae, a solar electric pump powered by a solar battery is present between an engine and gasoline. Accordingly, if the pump fails to supply the gasoline in a gasoline tank to the engine, it is impossible for the automobile Algae to run even with the tank filled up with gasoline. In other words, algae cannot proliferate without photosynthesis. With respect to gasoline, that for the automobile Algae is supplied from not only gas stations but also rain, spring water, irrigation water, agricultural area, urban area, etc., and thus, the automobile Algae is unlikely to become out of gas.

In view of the difficulty in reduction of nitrogen and phosphorus, if electric power generation of the solar battery is reduced by covering the solar battery in part, the same effect is considered to be obtained as in the reduction of nitrogen and Of course, if the solar battery were to be screened in whole to bring the solar power generation to zero, the automobile Algae would come to a stop. Consequently, first, algae would totally perish, and thus, oxygen supply to water would be terminated. As a result, Metazoa including fishes would then perish.

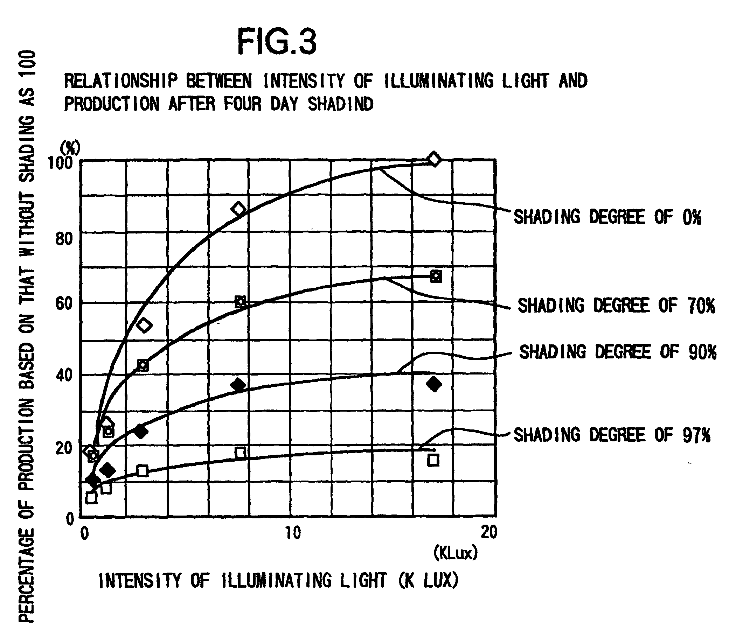

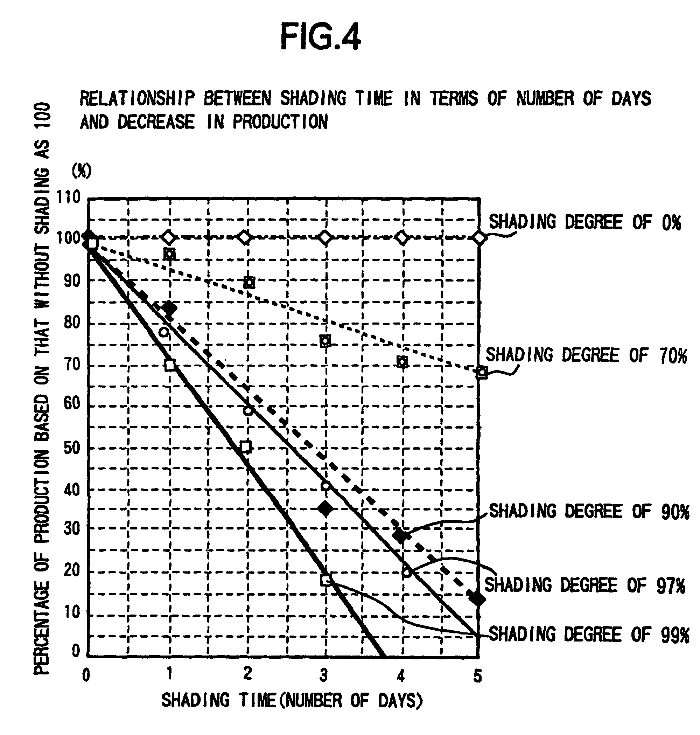

It has experimentally been found that when algae are allowed to stand under shading and then returned to the original lighted condition, productivity of the algae is lowered as compared with that anterior to the shading. Description will be given on the experiment. For example, algae were allowed to stand under shading in various shading degrees for 4 days and then re-exposed to light of various intensities to examine productivities of the algae. The productivities were deteriorated as shown in Fig. 3. According to Fig. 3, even if algae which have been placed under shading in a shading degree of 97% (almost pitch-dark) are re-exposed to intense light (20k lux), productivity thereof is as poor as less than 20% of that anterior to the shading. Fig. 4 is a graphical representation showing relationships between shading time in terms of number of days and decrease in production, and according thereto, the longer the shading time, the more the deterioration.

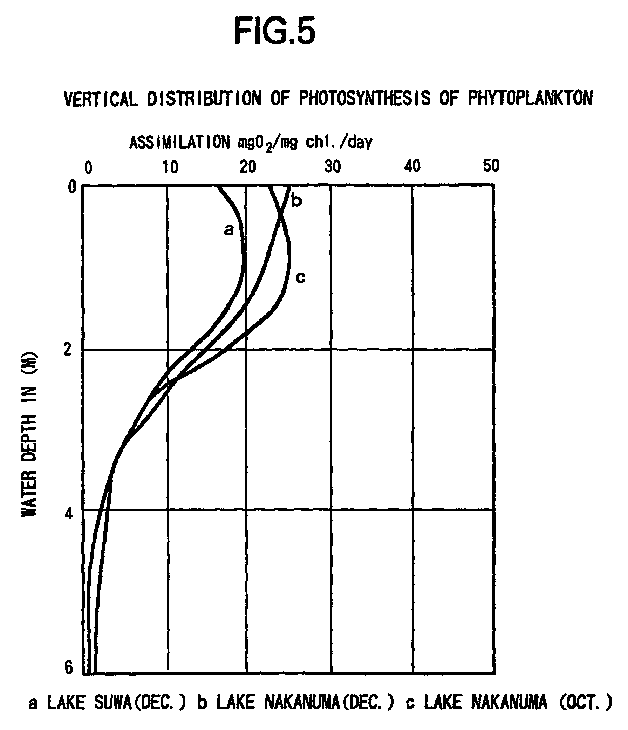

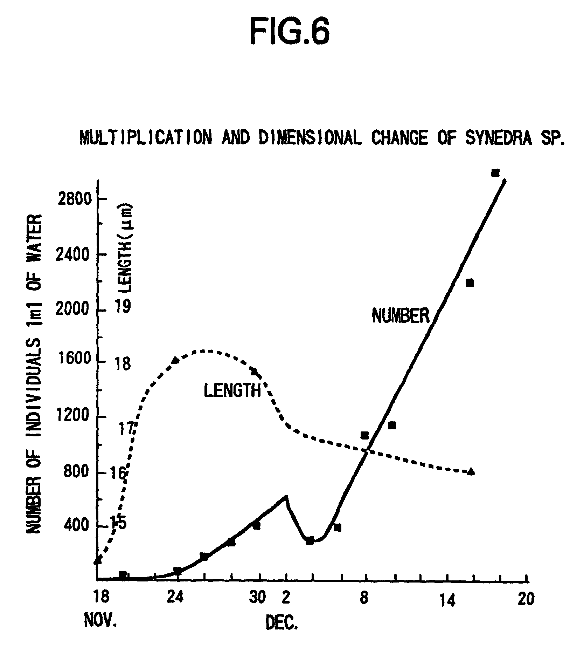

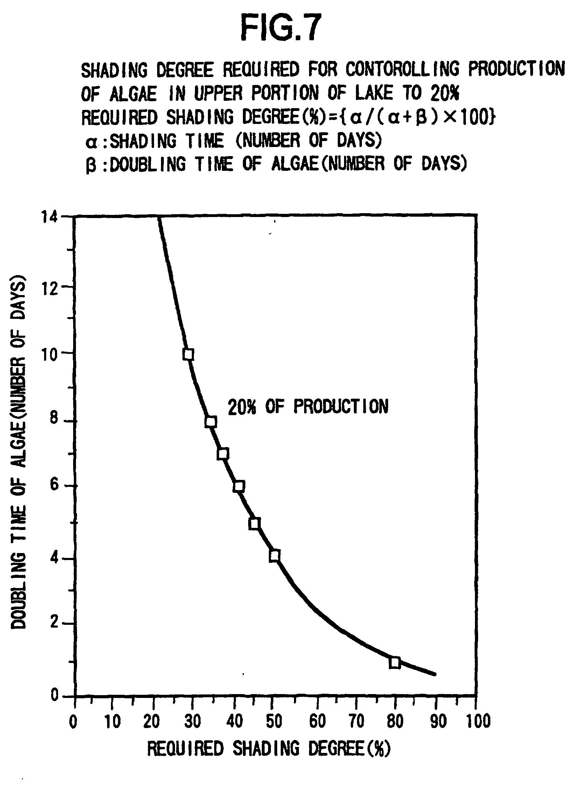

Fig. 5 is a graphical representation showing vertical distributions of photosynthesis of phytoplankton. According thereto, it is found to be desirable that about 20% of algae in an upper portion of a lake or the like be finally left in view of importance of the algae as an oxygen production and supply source. Further, as shown in Fig. 6, growth (multiplication) rate of algae is initially roughly rectilinear. Taking these together into consideration, shading degrees required for controlling production of algae in an upper portion of a lake or the like to 20% are as shown in Fig. 7. If shading time in terms of a number of days and doubling time of algae in terms of a number of days are represented by $\alpha$ and $\beta$, respectively, the required shading degree = $\{\alpha/(\alpha+\beta)\}$ x100 . Accordingly, as shown in Fig. 7, the required shading degree can be determined according to the multiplication rate of the algae.

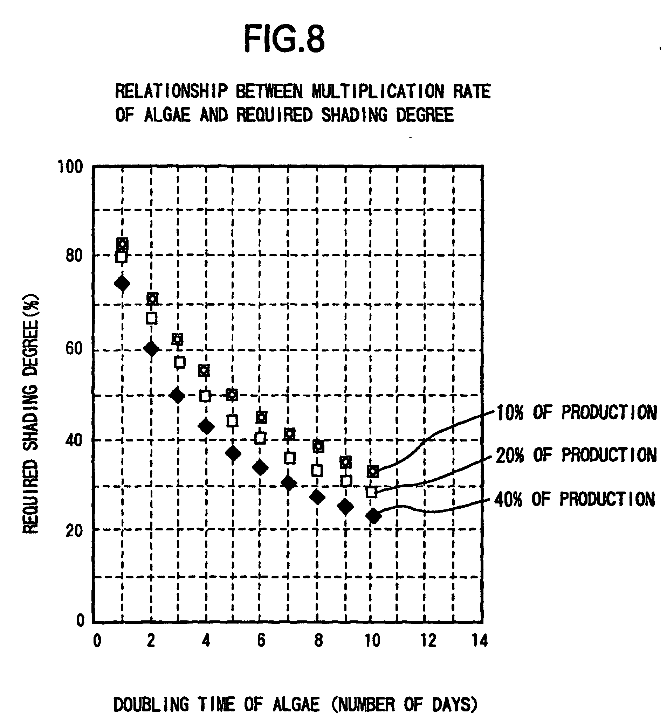

Further, researches have been made on control of production of algae to 10%, 20% and 40%. The results are graphically expressed as Fig. 8. From the graphical representation, a general formula is derived which is expressed as follows:

the general formula: $Y = K - A\log(X)$

wherein X represents doubling time of algae in terms of a number of days, Y represents a required shading degree, K is a constant which may be set as 85, and A is a coefficient of 50 to 55.

Accordingly, when the shading means for improving water quality are (is) placed on a water surface of a lake or the like so as to attain the required shading degree, eutrophication of the lake or the like can be repressed and multiplication of algae can be controlled to thereby maintain order of an ecosystem in the lake or the like. By virtue of this, it is possible to improve water quality.

For example, if the doubling time of algae in terms of a number of days is assumed to be 5, such a shading degree that production of algae is left on the order of 20% is determined as follows:

5 as the doubling time of algae in terms of a number of days is substituted for X in the general formula: $Y = 85 - A\log(X)$ , and A is set to be 52. Then, the shading degree is calculated such that $Y = 85 - 52\log(5) = 85 - 52 \times 0. 699 = 85-34. 788 = 50. 212$. Accordingly, the required shading degree is determined as 50%.

In the same manner, when the doubling time of algae in terms of a number of days is 2, $Y = 85 - 52\log(2) = 85 - 52 \times 0.3010 = 85 - 15. 652 = 69. 348$ . Accordingly, the shading degree is determined as about 70%,

. When the doubling time of algae in terms of a number of days is 7, $Y = 85 - 52\log(7) = 85 - 52 \times 0.8451 = 85 - 43.9452 = 41.0548$ . Accordingly, the shading degree is determined as 41%.

DESCRIPTION OF THE PREFERRED EMBODIMENTS

In the following, embodiments of the means for performing the method of improving water quality according to the present invention will be described with reference to the drawings

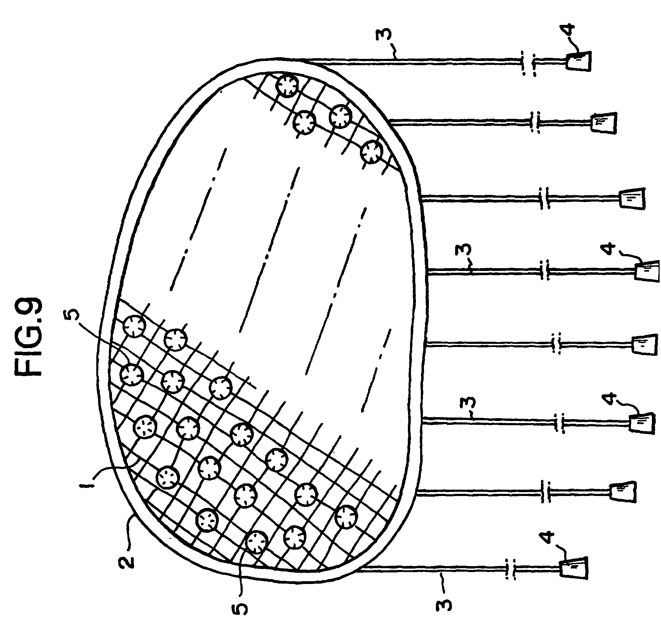

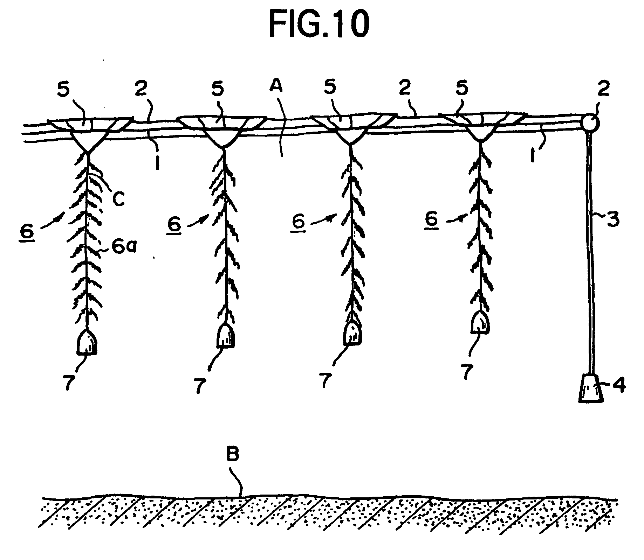

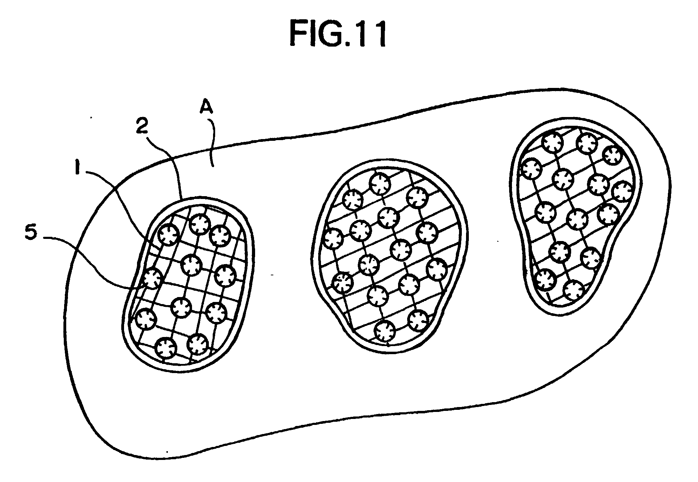

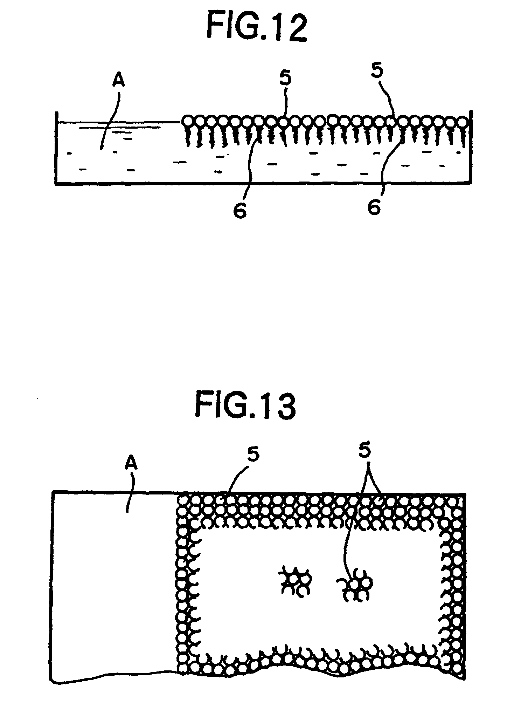

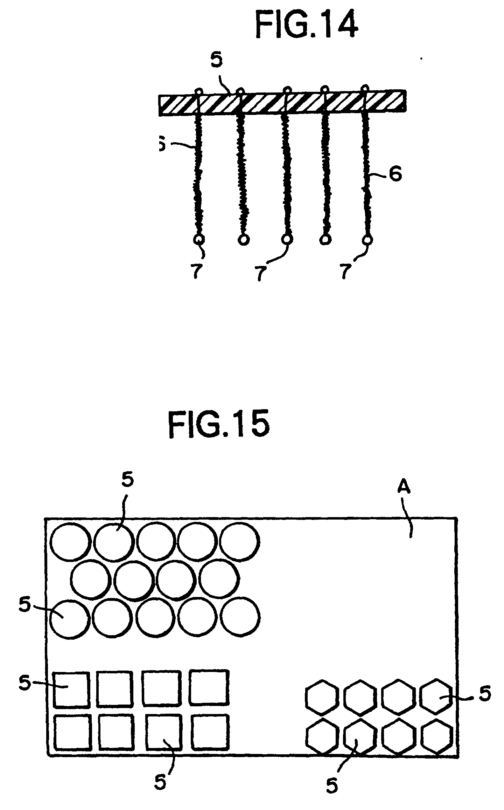

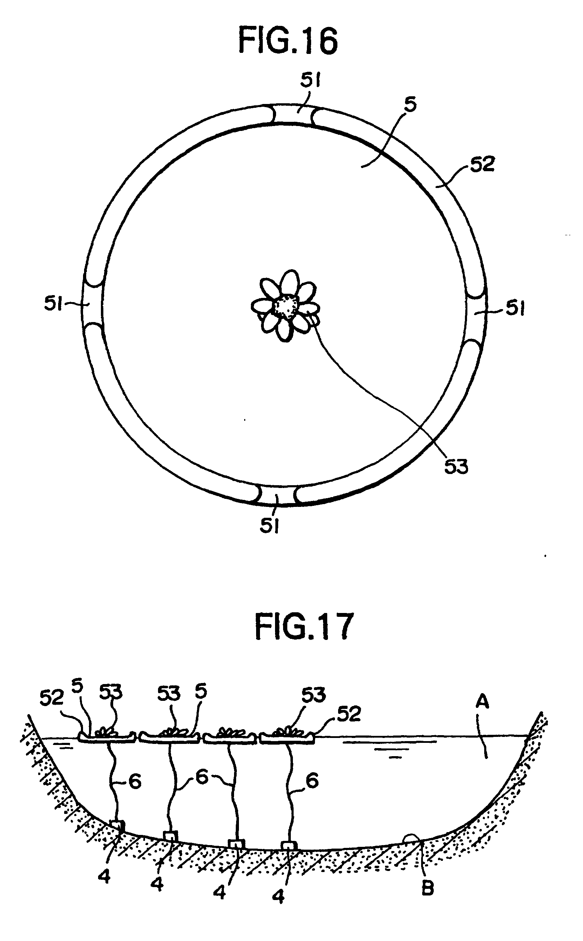

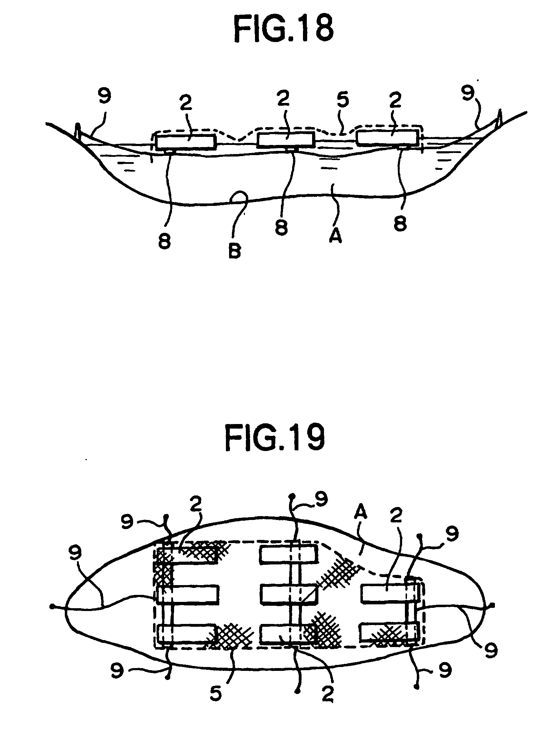

Fig. 9 is a perspective view of an embodiment of the shading means for performing the method of improving water quality according to the present invention; Fig. 10 is a side view of another embodiment of the shading means for performing the method of improving water quality according to the present invention; Fig. 11 is a plan view showing a mode of water quality improving operation by means of the embodiment shown in Fig. 9 of the shading means for improving water quality; Fig. 12 is a schematic view showing a mode of water quality improving operation by means of another embodiment of the shading means for performing the method of improving water quality according to the present invention; Fig. 13 is a view showing in plan the mode in Fig. 12; Fig. 14 is a front view of still another embodiment for performing the method of the present invention; Fig. 15 is a plan view showing a mode of water quality improving operation by means of the embodiment shown in Fig. 14 of the shading means for improving water quality; Fig. 16 is a plan view of a further embodiment for performing the method of the present invention; Fig. 17 is a schematic view showing a mode of water quality improving operation by means of the embodiment shown in Fig. 16 of the shading means for improving water quality; Fig. 18 is a schematic view showing a mode of water quality improving operation by means of a still further embodiment of the shading means for performing the method of improving water quality according to the present invention; and Fig. 19 is a view showing in plan the mode in Fig. 18.

In Fig. 9, reference number 1 represents a net member, such as a fishing net, having an appropriate size, reference number 2 represents a float member (buoyant member) peripherally attached to the net member 1, reference number 3 represents a rope or cord member attached to the bottom of the float member 2, and reference number 4 represents a weight attached to the lower end of the rope or cord member 3 for alighting and resting on the bottom of the water. Reference number 5 represents a buoyant shading member for blocking light, and a number of the shading members are attached onto the net member 1. These members 1 to 5 constitute one embodiment of the shading means for performing the method of improving water quality according to the present invention. It is desired that as the shading member 5, for example, an artificial duckweed having buoyancy be used in order to keep the net member 1 in floating condition. In Fig. 10, reference letter A represents a lake or the like to be improved in its water quality, and reference letter B represents the bottom of the lake or the like A. The float member 2 may peripherally be attached to the net member 1 all around. However, float members 2 may peripherally be attached to the net member 1 at appropriate intervals. The point resides in that the peripheral portion of the net member 1 is kept in floating condition.

To perform improvement of water quality using the shading means for improving water quality, as shown in Fig. 11, a plurality of the means for improving water quality are placed on a water surface of a lake or the like A so as to attain the above-described required shading degree, and they are allowed to float. Light impinging upon the water surface is thereby blocked with the shading members 5 attached onto the net member 1 to the required shading degree. By virtue of this, multiplication of algae which propagate under the sunshine is controlled to maintain order of an ecosystem in the lake or the like, thereby attaining improvement of water quality.

Referring again to Fig. 10, another embodiment of the shading means for improving water quality improving is shown therein. To the bottom of the shading member 5, a contact member 6 for contact with water is attached in which copper wire c or a wire exhibiting bactericidal activity substantially comparable to that of copper wire is woven and which is provided with a number of contact elements 6a radially extending therefrom and thus which has a brush-like form A plummet 7 which is relatively light weight is attached to the lower end of the contact member 6 according to need to suspend the contact member 6 toward the bottom of the water. When the shading means for improving water quality which are provided with the above-described contact members 6 are placed on a water surface and allowed to float, as shown in Fig. 11, the sunlight is blocked with the shading members 5 to control multiplication of algae which propagate under the sunshine, thereby attaining improvement of water quality. Besides this, microorganisms gather on the contact member 6 and the contact elements 6a thereof to form a biological film, and the microorganisms forming the biological film ingest organic matter or suspended matter or oxidize ammonia in the water. In consequence, further improved water quality is attained.

Figs. 12 and 13 show an appropriate number of shading means for improving water quality each of which comprises a shading member (light blocking member) 5 in the form of a spherical hollow float body (buoyant body) made of a light-proof material such as a light-proof plastic, and a contact member 6 for contact with water attached to the bottom of the shading member 5, and which are allowed to float over a required area of a water surface of a lake (agricultural reservoir) or the like A to control development of water bloom (for example, due to outbreak of Microcystis) in the water. To permit individual shading members 5 to move by the wind or waves, no weight is attached to each contact member 6. The shading member 5 is not restricted to the spherical shape and may have a polyhedral shape, pyramidal shape or the like. However, when the shading members are used for improvement of water quality of an agricultural reservoir or a swimming pool in a school, it is desired that they be inexpensive to enable use in a large number, that they have an appropriate weight, that they be easy of placement, removal and cleaning, and that they be awkward as a plaything. Further, they may be colored according to need.

Fig. 14 shows still another embodiment of the shading means for improving water quality which comprises a shading member (light blocking member) 5 in the form of, for example, a circular, square or rectangular, hexagonal or octagonal board-like float body (buoyant body) having light-proof properties, and an appropriate number of contact members 6 for contact with water attached to the shading member 5. If a copper wire c or the like is woven in the contact member 6, control of algae and biological treatment are effected in parallel. Accordingly, the shading means for improving water quality improving are preferably used to improve water quality of a swimming pool or agricultural reservoir A, as shown in Fig. 15.

Fig. 16 shows a further embodiment of the shading means for improving water quality which comprises a shading member 5 in the form of an imitative royal water lily including a circular board made of a sufficiently buoyant and light-proof material such as styrofoam and circumferentially provided with a vertical wall 52 having water channels 51 and centrally provided with an artificial flower 53, and a contact member 6 for contact with water attached to the bottom of the shading member 5 and having its lower end provided with a weight 4 for alighting and resting on the bottom of the water. As shown in Fig. 17, the shading means for improving water quality of this embodiment are preferably used in a lake or the like A, because there is substantially no undesired possibility by virtue of the presence of the vertical wall 52 having water channels 51 that they overlap each other due to strong wind or undesired possibility by selecting positions of placement thereof that they are blown toward the shore by strong wind. The shading member 5 is not restricted to the royal water lily-like form and may have a polygonal shape.

Figs. 18 and 19 show a still further embodiment of the shading means for improving water quality which comprises a plurality of board-like float members (buoyant members) 2 that are highly buoyant and appropriately sized, connecting members 8 for connecting the float members 2 by the bottoms thereof to form a plurality of sets of connected-float members that are to be allowed to float on a water surface of a lake or the like A, a shading member 5 in the form of a net placed over the connected-float member sets, and mooring ropes or cords 9 for mooring the connected-float member sets to the shore of the lake or the like. There is substantially no undesired possibility that the shading means for improving water quality is moved by the wind or waves. Depending upon the condition of a placement site, however, a contact member 6 distally provided with a weight 4 for alighting and resting on the bottom of the water may be attached to the bottom of the float member 2. With respect to this embodiment, in a lake or the like A to which birds often come flying, it is desired to protect the birds by, for example, constructing a structure capable of serving as a covering such as a roof. Instead of the board-like float members 2, pipes which are relatively long and highly buoyant may be used.

As described above, the shading means for improving water quality may be in various forms to carry out the present invention. In relation to any of them, however, it is in common desired that the float member 2 or shading member 5 have sufficient buoyancy and light-proof properties, that the shading means for improving water quality do not submerge during water quality improving operation, that the shading means be so constructed as to prevent water from collecting on the surface the float member 2, that the shading means have satisfactory mechanical and chemical strengths, and that the shading means stand repeated uses.

According to the process for improving water quality of the present invention, a water surface of a lake or the like to be improved in its water quality which has a water depth of about 5m or less is shaded in a required shading degree determined in accordance with the above-described general formula to thereby control multiplication of algae in the water. Accordingly, when the shading means for performing the method of improving water quality of the present invention are (is) placed and allowed to float on the lake or the like to shade the same, it is possible to satisfactorily improve the water quality through a simple operation. The shading means for improving water quality may comprise a net member having an appropriate size, a float member (buoyant member) peripherally attached to the net member, an appropriate number of rope or code members attached to the bottom of the float member and each provided with a weight for alighting and resting on the bottom of the lake or the like, and shading members for blocking light attached onto the net member; it may further comprise brush-like or string-like contact members for contact with water into which copper wire or a wire exhibiting bactericidal activity substantially comparable to that of copper wire is woven and which are attached to the bottoms of the respective buoyant shading members; or it may comprise a shading (light blocking) member in the form of, for example, a light-proof spherical or polyhedral float body (buoyant body) or a light-proof circular or polygonal board-like float body (buoyant body), and one or more brush-like or string-like contact members for contact with water into which copper wire or a wire exhibiting bactericidal activity substantially comparable to that of copper wire is woven and which are attached to the bottom of the shading member. Accordingly, it has a simple structure and can easily and economically be prepared and is thus inexpensive. In improving water quality of a polluted lake or the like, the shading means for improving water quality are (is) placed and allowed to float on the polluted lake or the like over such an area that a required shading degree is attained, thereby controlling multiplication of algae which propagate under sunshine. By virtue of this, the water quality can be improved with extreme ease.

Further, each of the contact members for contact with water which is attached to the bottom of the shading member is such that copper wire c or a wire exhibiting bactericidal activity substantially comparable to that of copper wire is woven therein, and it is preferably provided with a number of contact elements radially extending therefrom and thus has a brush-like form. Accordingly, in addition to the above-described effect attained by the shading member(s), microorganisms gather on the contact member to form a biological film, and the microorganisms forming the biological film ingest organic matter or suspended matter or oxidize ammonia in water. In consequence, further improved water quality is attained.

Moreover, if the shading member is in the form of an artificial duckweed, it looks during water quality improving operation as if duckweed were floating on a water surface. This is very preferable in appearance.

## Claims

1. Method for improving water quality of a lake or the like which has a water depth of about 5 meters or less, said method comprising:

- determining the doubling time of algae,

- calculating a required shading degree Y, i.e. the percentage of shaded area with the help of the formula

$$Y = 85 - A \log(X),$$

wherein X represents the determined doubling time of algae in terms of a number of days and A is a coefficient of 50 to 55,

- arranging a light shading member with a thus calculated shading degree for shading a light incident into water on the water surface of a lake or the like,
to thereby control eutrophication of a lake or the like and to control multiplication of algae and consequently to improve the water quality.

2. Method for improving water quality according to claim 1, wherein the shading is performed with a shading means comprising:

a net member having an appropriate size,

a float member peripherally attached to the net member,

an appropriate number of rope or cord members attached to the bottom of the float member, said rope or code members each provided with a weight for alighting and resting on the water bottom of a lake or the like, and

shading members for blocking light attached onto the net member.

3. Method for improving water quality according to claim 2, wherein a shading member in the form of an artificial duckweed is used.

4. Method for improving water quality according to claim 2 or 3, wherein a shading member is used having its bottom provided with a brush-like or string-like contact member for contact with water, said contact member being such that copper wire or a wire exhibiting bactericidal activity substantially comparable to that of copper wire is woven or is not woven therein.

5. Method for improving water quality according to claim 1, wherein the shading is performed with shading means comprising:

a light-proof float body having a spherical or polyhedral shape or the like, and

a brush-like or string-like contact member for contact with water attached to the bottom of the float body, said contact member being such that copper wire or a wire exhibiting bactericidal activity substantially comparable to that of copper wire is woven or not woven therein.

6. Method for improving water quality according to claim 1, wherein shading is performed with shading means comprising:

a light-proof float body in the form of a circular or polygonal board or the like, and

a brush-like or string-like contact member for contact with water attached to the bottom of the float body, said contact member being such that copper wire or a wire exhibiting bactericidal activity substantially comparable to that of copper wire is woven or not woven therein.

7. Method for improving water quality according to claim 6, wherein said light-proof float body is peripherally provided with a vertical wall having an appropriate number of water channels.

8. Method for improving water quality according to claim 1, wherein the shading is performed with shading means comprising:

a plurality of float members each in the form of a board, pipe or the like, said float members being highly buoyant,

one or a plurality of connecting members for connecting the float members by the bottoms thereof to form one or a plurality of connected-float member sets that are to be allowed to float on a water surface of a lake or the like,

a shading member placed over the connected-float member set or sets that are allowed to float on the water surface of the lake or the like, and

one or a plurality of mooring ropes or cords for mooring the connected-float member set or sets to the shore of the lake or the like.

9. Method for improving water quality according to claim 8, wherein each float member is in the form of a board, pipe or the like and has its bottom provided with a brush-like or string-like contact member for contact with water, said contact member being such that copper wire or a wire exhibiting bactericidal activity substantially comparable to that of copper wire is woven or not woven therein.

10. Method for improving water quality according to one of the claims 4 to 9, wherein the contact member for contact with water has its lower end provided with a plummet for rendering the contact member downward suspended or a weight for alighting and resting on the bottom of a lake or the like.

**Patentansprüche**

1. Verfahren zur Verbesserung der Wasserqualität eines Sees oder dergleichen, welcher eine Wassertiefe von etwa 5 Metern oder weniger aufweist, wobei das Verfahren umfasst:

   - Ermitteln der Verdopplungszeit von Algen,

   - Berechnen eines erforderlichen Abschattungsgrades Y, d.h. des Prozentsatzes einer abgeschatteten Fläche, mit Hilfe der Formel

$$Y = 85 - A \log (X),$$

   wobei X die ermittelte Verdopplungszeit der Algen bezogen auf eine Anzahl von Tagen darstellt und A ein Koeffizient von 50 bis 55 ist,

   - Anordnen eines Lichtabschattungselements mit einem so berechneten Abschattungsgrad für das Abschatten von in das Wasser auf der Wasseroberfläche eines Sees oder dergleichen einfallenden Lichts,
   um so die Eutrophikation eines Sees oder dergleichen zu beeinflussen und die Vermehrung von Algen zu beeinflussen und infolgedessen die Wasserqualität zu verbessern.

2. Verfahren für das Verbessern von Wasserqualität nach Anspruch 1, **dadurch gekennzeichnet, dass** die Abschattung mit einem Abschattungsmittel erfolgt, welches umfasst:

   ein Netzelement angemessener Größe

   ein peripher an dem Netzelement angebrachtes Schwimmelement,

   eine geeignete Anzahl an Tau- oder Leinenelementen, welche an der Unterseite des Schwimmelements angebracht sind, wobei die Tau- oder Leinenelemente jeweils mit einem Gewicht für das Niedersinken und Ruhen auf dem Gewässerboden eines Sees oder dergleichen versehen sind, und

   auf dem Netzelement angebrachte Abschattungselemente für das Blockieren von Licht.

3. Verfahren für das Verbessern von Wasserqualität nach Anspruch 2, **dadurch gekennzeichnet, dass** ein Abschattungselement in Form einer künstlichen Wasserlinse verwendet wird.

4. Verfahren für das Verbessern von Wasserqualität nach Anspruch 2 oder 3, **dadurch gekennzeichnet, dass** ein Abschattungselement verwendet wird, dessen Unterseite mit einem bürstenartigen oder fadenartigen Kontaktelement für Kontakt mit Wasser versehen ist, wobei das Kontaktelement solcher Art ist, dass Kupferdraht oder ein Draht mit einer bakteriziden Wirkung, welche im Wesentlichen mit der von Kupfer vergleichbar ist, in dieses eingewebt oder nicht eingewebt ist.

5. Verfahren für das Verbessern von Wasserqualität nach Anspruch 1, **dadurch gekennzeichnet, dass** die Abschattung mit Abschattungsmitteln vorgenommen wird, welche umfassen:

   einen lichtbeständigen Schwimmkörper mit einer kugelförmigen oder vielflächigen Form oder dergleichen, und

   ein bürstenartiges oder fadenartiges Kontaktelement für Kontakt mit Wasser, welches an der Unterseite des Schwimmkörpers angebracht ist, wobei das Kontaktelement solcher Art ist, dass Kupferdraht oder ein Draht mit einer bakteriziden Wirkung, welche im Wesentlichen mit der von Kupfer vergleichbar ist, in dieses eingewebt oder nicht eingewebt ist.

6. Verfahren für das Verbessern von Wasserqualität nach Anspruch 1, **dadurch gekennzeichnet, dass** die Abschattung mit Abschattungsmitteln vorgenommen wird, welche umfassen:

   einen lichtbeständigen Schwimmkörper mit einer kreisförmigen oder vieleckigen Form oder dergleichen, und

   ein bürstenartiges oder fadenartiges Kontaktelement für Kontakt mit Wasser, welches an der Unterseite des Schwimmkörpers angebracht ist, wobei das Kontaktelement solcher Art ist, dass Kupferdraht oder ein Draht mit einer bakteriziden Wirkung, welche im Wesentlichen mit der von Kupfer vergleichbar ist, in dieses eingewebt oder nicht eingewebt ist.

7. Verfahren für das Verbessern von Wasserqualität nach Anspruch 6, **dadurch gekennzeichnet, dass** der lichtbeständige Schwimmkörper an seinem Umfang mit einer vertikalen Wand versehen ist, welche eine geeignete Anzahl von Wasserkanälen aufweist.

8. Verfahren für das Verbessern von Wasserqualität nach Anspruch 1, **dadurch gekennzeichnet, dass** die Abschattung mit Abschattungsmitteln vorgenommen wird, welche umfassen:

mehrere Schwimmelemente jeweils in Form eines Bretts, Rohrs oder dergleichen, wobei die Schwimmelemente sehr schwimmfähig sind,

ein oder mehrere Verbindungselemente für das Verbinden der Schwimmelemente durch deren Unterseiten, um eine oder mehrere Gruppen verbundener Schwimmelemente zu bilden, welche man auf einer Wasseroberfläche eines Sees oder dergleichen schwimmen lässt,

ein über der Gruppe bzw. den Gruppen von verbundenen Schwimmelementen, welche man auf der Wasseroberfläche des Sees oder dergleichen schwimmen lässt, angeordnetes Abschattungselement und

ein oder mehrere Verankerungstaue oder -leinen für das Verankern der Gruppe bzw. Gruppen verbundener Schwimmelemente am Ufer des Sees oder dergleichen.

9. Verfahren für das Verbessern von Wasserqualität nach Anspruch 8, **dadurch gekennzeichnet, dass** jedes Schwimmelement die Form eines Bretts, Rohrs oder dergleichen hat und an seiner Unterseite mit einem bürsten- oder fadenartigen Kontaktelement für Kontakt mit Wasser versehen ist, wobei das Kontaktelement solcher Art ist, dass Kupferdraht oder ein Draht mit einer bakteriziden Wirkung, welche im Wesentlichen mit der von Kupfer vergleichbar ist, in dieses eingewebt oder nicht eingewebt ist.

10. Verfahren für das Verbessern von Wasserqualität nach einem der Ansprüche 4 bis 9, **dadurch gekennzeichnet, dass** das Kontaktelement für Kontakt mit Wasser an seinem unteren Ende mit einem Senkblei, um das Kontaktelement nach unten hängen zu lassen, oder mit einem Gewicht für das Niedersinken und Ruhen auf dem Boden eines Sees oder dergleichen versehen ist.

**Revendications**

1. Procédé pour améliorer la qualité de l'eau d'un lac ou similaire ayant une profondeur d'eau d'environ 5 mètres ou moins, ledit procédé comprenant:

- la détermination du temps de doublement des algues,
- le calcul d'un degré d'ombrage requis Y, c'est-à-dire du pourcentage de superficie ombragée, à l'aide de la formule

$$Y = 85 - A \log (X),$$

où X représente le temps de doublement des algues déterminé, exprimé en nombre de jours, et A est un coefficient valant de 50 à 55,
- la mise en place d'un élément d'atténuation de la lumière avec un degré d'ombrage ainsi calculé pour atténuer une lumière incidente à l'eau sur la surface de l'eau d'un lac ou similaire,

afin de contrôler ainsi l'eutrophisation d'un lac ou similaire et afin de contrôler la prolifération d'algues et par voie de conséquence améliorer la qualité de l'eau.

2. Procédé pour améliorer la qualité de l'eau selon la revendication 1, dans lequel l'ombrage est assuré par des moyens d'ombrage comprenant:

un élément de filet ayant une taille appropriée, un élément flottant fixé périphériquement à l'élément de filet, un nombre approprié d'éléments de cordes ou filins fixés sur le dessous de l'élément flottant, lesdits éléments de cordes ou filins étant munis chacun d'un poids destiné à se poser et reposer sur le fond de l'eau d'un lac ou similaire, et des éléments d'ombrage pour bloquer la lumière fixés sur l'élément de filet.

3. Procédé pour améliorer la qualité de l'eau selon la revendication 2, dans lequel on utilise un élément d'ombrage sous la forme d'une lentille d'eau artificielle.

4. Procédé pour améliorer la qualité de l'eau selon la revendication 2 ou la revendication 3, dans lequel on utilise un élément d'ombrage dont le dessous est muni d'un élément de contact similaire à une brosse ou similaire à une corde et destiné à être en contact avec l'eau, ledit élément de contact étant tel que du fil de cuivre ou un fil présentant une activité bactéricide sensiblement comparable à celle du fil de cuivre est tissé ou est non tissé dedans.

5. Procédé pour améliorer la qualité de l'eau selon la revendication 1, dans lequel l'ombrage est assuré par des moyens d'ombrage comprenant:

un corps flottant étanche à la lumière ayant une forme sphérique ou polyédrique ou similaire, et un élément de contact similaire à une brosse ou similaire à une corde, destiné à être en contact avec l'eau, fixé sur le dessous du corps flottant, ledit élément de contact étant tel que du fil de cuivre ou un fil présentant une activité bactéricide sensiblement comparable à celle du fil de cuivre est tissé ou non tissé dedans.

6. Procédé pour améliorer la qualité de l'eau selon la revendication 1, dans lequel l'ombrage est assuré par des moyens d'ombrage comprenant:

   un corps flottant étanche à la lumière sous la forme d'une plaque circulaire ou polygonale ou similaire, et
   un élément de contact similaire à une brosse ou similaire à une corde, destiné à être en contact avec l'eau, fixé sur le dessous du corps flottant, ledit élément de contact étant tel que du fil de cuivre ou un fil présentant une activité bactéricide sensiblement comparable à celle du fil de cuivre est tissé ou non tissé dedans.

7. Procédé pour améliorer la qualité de l'eau selon la revendication 6, dans lequel ledit corps flottant étanche à la lumière est muni sur sa périphérie d'une paroi verticale ayant un nombre approprié de canaux de passage d'eau.

8. Procédé pour améliorer la qualité de l'eau selon la revendication 1, dans lequel l'ombrage est assuré par des moyens d'ombrage comprenant:

   une pluralité d'éléments flottants ayant chacun la forme d'une plaque, d'un tuyau ou similaires, lesdits éléments flottants ayant une flottabilité élevée,
   un seul ou une pluralité d'éléments de raccordement pour raccorder les éléments flottants par leurs dessous afin de former un seul ou une pluralité d'ensembles d'éléments flottants raccordés qui sont prévus pour être laissés à flotter sur la surface de l'eau d'un lac ou similaire,
   un élément d'ombrage placé par dessus le ou les ensembles d'éléments flottants raccordés qui sont laissés à flotter sur la surface de l'eau du lac ou similaire, et
   un seul ou une pluralité de cordes ou filins d'amarrage pour amarrer le ou les ensembles d'éléments flottants raccordés à la berge du lac ou similaire.

9. Procédé pour améliorer la qualité de l'eau selon la revendication 8, dans lequel chaque élément flottant se présente sous la forme d'une plaque, d'un tuyau ou similaires et a son dessous muni d'un élément de contact similaire à une brosse ou similaire à une corde et destiné à être en contact avec l'eau, ledit élément de contact étant tel que du fil de cuivre ou un fil présentant une activité bactéricide sensiblement comparable à celle du fil de cuivre est tissé ou non tissé dedans.

10. Procédé pour améliorer la qualité de l'eau selon l'une des revendications 4 à 9, dans lequel l'élément de contact destiné à être en contact avec l'eau a son extrémité inférieure muni d'un plomb de sonde pour faire en sorte que l'élément de contact soit suspendu vers le bas ou un poids destiné à se poser et reposer sur le fond d'un lac ou similaire.

# FIG.1

EUTROPHICATION OF LAKE AND ECOSYSTEM

TERTIARY CONSUMERS — BIRDS AND BEASTS, HUMAN BEINGS

CONSUMERS    SECONDARY CONSUMERS — FISHES

AQUATIC INSECTS,
LEECH, EARTHWORM, SHELLFISH,
PRIMARY CONSUMERS — ROTATORIA, WATER FLEA, PROTOZOA,
ETC.

BASIC PRODUCTION — ALGAE

OLIGOTROPHY

MESOTRORHY

EUTROPHY

EP 0 901 987 B1

# FIG.2

PRINCIPLE OF MULTIPLICATION(PRODUCTION)OF ALGAE

SOLAR BATTERY

AUTOMOBILE    ALGAE

ENGINE

ELECTRIC PUMP
(POWERD BY SOLAR BATTERY)

GASOLINE TANK

N&P=GASOLINE
SPOT SOURCE =GAS STATION
=SEWAGE(NIGHT SOIL, INDUSTRIAL WASTE WATER)
TREATMENT PLANT

NON-SPOT (SPREADING)SOURCE =SPRING WATER,
IRRIGATION WATER, AGRICULTURAL AREA,
URBAN AREA, LAKE

EP 0 901 987 B1

# FIG.3

RELATIONSHIP BETWEEN INTENSITY OF ILLUMINATING LIGHT AND
PRODUCTION AFTER FOUR DAY SHADIND

PERCENTAGE OF PRODUCTION BASED ON THAT WITHOUT SHADING AS 100

INTENSITY OF ILLUMINATING LIGHT (K LUX)

SHADING DEGREE OF 0%

SHADING DEGREE OF 70%

SHADING DEGREE OF 90%

SHADING DEGREE OF 97%

# FIG.4

RELATIONSHIP BETWEEN SHADING TIME IN TERMS OF NUMBER OF DAYS
AND DECREASE IN PRODUCTION

# FIG.5

VERTICAL DISTRIBUTION OF PHOTOSYNTHESIS OF PHYTOPLANKTON

a LAKE SUWA(DEC. ) b LAKE NAKANUMA(DEC. ) c LAKE NAKANUMA (OCT. )

# FIG.6

MULTIPLICATION AND DIMENSIONAL CHANGE OF SYNEDRA SP.

# FIG.7

SHADING DEGREE REQUIRED FOR CONTOROLLING PRODUCTION
OF ALGAE IN UPPER PORTION OF LAKE TO 20%
REQUIRED SHADING DEGREE(%)={$\alpha$/($\alpha$+$\beta$)$\times$100}
  $\alpha$ :SHADING TIME (NUMBER OF DAYS)
  $\beta$ :DOUBLING TIME OF ALGAE(NUMBER OF DAYS)

# FIG.8

RELATIONSHIP BETWEEN MULTIPLICATION RATE
OF ALGAE AND REQUIRED SHADING DEGREE

10% OF PRODUCTION

20% OF PRODUCTION

40% OF PRODUCTION

DOUBLING TIME OF ALGAE (NUMBER OF DAYS)

FIG.9

FIG.10

# FIG.11

EP 0 901 987 B1

# FIG.12

# FIG.13

# FIG.14

# FIG.15

# FIG.16

# FIG.17

# FIG.18

# FIG.19